# EUROPÄISCHE PATENTSCHRIFT

(11) **EP 1 083 095 B1**
(45) Veröffentlichungstag und Bekanntmachung des Hinweises auf die Patenterteilung: **19.11.2003**
(21) Anmeldenummer: 00117895.3
(22) Anmeldetag: 19.08.2000
(51) Int. Cl.: B60R 13/02

(54) **Vorrichtung zur Versteifung eines Dachhimmels eines Kraftfahrzeugs**
Apparatus for stiffening a vehicle headliner
Dispositif permettant de raidir une garniture de pavillon de véhicule

(30) Priorität: 08.09.1999 DE 19942894
(43) Veröffentlichungstag der Anmeldung: 14.03.2001
(73) Patentinhaber: Volkswagen AG, 38436 Wolfsburg (DE)
(72) Erfinder: Aschwin, Maas, 38442 Ehmen (DE)

(56) Entgegenhaltungen:
- DE-A- 19 632 222
- GB-A- 2 026 968
- US-A- 5 509 247

## Beschreibung

Die Erfindung betrifft eine Vorrichtung zur Versteifung eines Dachhimmels eines Kraftfahrzeugs nach dem Oberbegriff des Anspruchs 1.

Dachhimmel werden bei der Montage üblicherweise von außerhalb des Fahrzeugs in eine Fahrzeugkarosserie eingebracht und dort im Dachbereich endmontiert. An einem derartigen Dachhimmel können vielfältige Ausstattungselemente, wie z. B. Handgriffe, Sonnenblenden, Kleiderhaken, Beleuchtungselemente, etc. angebracht werden.

Aus Kosten- und Gewichtsgründen werden die Dachhimmel aus einem relativ leichten Material hergestellt, z. B. Fieberglas und/oder geschäumtem Kunststoff, was jedoch zur Folge hat, daß die Dachhimmel relativ instabil sind und während der Handhabung, z.B. beim Transport und/oder bei der Montage, durch Knicken, Verdrehen oder sonstige Beanspruchung brechen und damit zerstört werden können. Eine derartige Gefahr ist insbesondere bei Dachhimmeln mit großen Abmessungen, wie diese z.B. in Kombifahrzeugen, Transportern etc. benötigt werden, gegeben.

Es ist bereits bekannt, Dachhimmel mit einer integrierten Verstärkungsstruktur zu versehen, die den Dachhimmel an ausgewählten Bereichen versteift. Nachteilig hierbei ist jedoch, daß diese integral mit dem Dachhimmel ausgebildeten Verstärkungsstrukturen insgesamt zu einem unerwünscht hohen Gewicht des Dachhimmels führen, was zudem auch die Kosten für die Herstellung erhöht.

Vorrichtungen zur Versteifung eines Dachhimmels zu dessen zerstörungsfreiem, d. h. insbesondere knick- und bruchfreien Transport und/oder Montage, sind ebenfalls bereits bekannt. So ist aus der gattungsgemäßen US 5 688 022 eine derartige Vorrichtung zur Versteifung eines Dachhimmels eines Kraftfahrzeugs bekannt, die mit dem Dachhimmel lösbar verbindbar ist. Konkret ist hier eine Trägerplatte vorgesehen, auf die der Dachhimmel aufgelegt wird, wobei die Trägerplatte Anformungen aufweist, in die entsprechende Vorsprünge am Dachhimmel so eingreifen, daß dieser formschlüssig und gegen Verrutschen auf der Ablageplatte festgelegt ist. Anschließend wird dann diese Montageeinheit aus Dachhimmel und Trägerplatte in einen Container eingeschoben und zum Fahrzeug transportiert, wo die Montageeinheit von Werkern oder mittels eines Roboters von der Heckseite her über das Rückfenster in den Innenraum des Kraftfahrzeugs eingebracht und dort unter vorübergehender Festlegung der Trägerplatte an der Karosserie endmontiert wird.

Nachteilig bei dieser Vorrichtung ist, daß hier eine Versteifung nur mit erheblichem Zeitaufwand möglich ist, da der Dachhimmel hierfür relativ aufwendig von in der Regel mehreren Werkern zur Trägerplatte zu transportieren und dort zu positionieren ist, bevor dieser unter Zwischenlagerung in einem Container zerstörungsfrei zum Fahrzeug transportierbar und dort endmontierbar ist. Eine derartige Montageeinheit aus Dachhimmel und Trägerplatte muß zudem in aufwendiger Weise stets von mehreren Werkem oder mittels eines Roboters gehandhabt werden, was wiederum teuer ist. Insgesamt führt dies somit zu einem erheblichen Zeitaufwand bei der Montage eines Dachhimmels, was die Produktionsund Herstellungskosten in unerwünschter Weise erhöht. Weiter ist eine derartige Trägerplatte stets nur in Verbindung mit einer bestimmten Dachhimmelgeometrie einsetzbar, so daß die Vorrichtung insgesamt nur wenig flexibel, z.B. in Verbindung mit Dachhimmeln anderer Abmessungen und Geometrien, verwendbar ist.

Eine ähnliche Vorrichtung zur Versteifung eines Dachhimmels eines Kraftfahrzeugs ist aus der DE 34 28 008 C2 bekannt. Auch hier ist der Dachhimmel zur Versteifung von in der Regel mehreren Werkem zeitaufwendig zu einer Blechplatte als Trägerplatte zu transportieren, bevor diese dort zur Versteifung festgelegt werden kann. Anschließend wird die Montageeinheit aus Blechplatte und versteiftem Formhimmel mittels eines Roboters in das Kraftfahrzeug eingebracht und dort über an der Blechplatte angeordnete Funktionsteile, wie z. B. einer Zylinder-Kolben-Einheit, einem Schrauber, etc. endmontiert. Auch bei dieser Vorrichtung ergeben sich die oben in Verbindung mit der US 5 688 022 angeführten Nachteile, so daß die Montage eines Dachhimmels auch hier nur wieder mit erheblichen Zeitaufwand durchzuführen ist, was die Produktions- und Herstellungskosten in unerwünschter Weise erhöht.

Aufgabe der Erfindung ist es daher, eine Vorrichtung zur Versteifung eines Dachhimmels eines Kraftfahrzeugs zu schaffen, mit der eine Versteifung für einen zerstörungsfreien, insbesondere einen knick- und bruchfreien Transport und/oder Montage eines Dachhimmels einfach und schnell herzustellen ist.

Diese Aufgabe wird mit den Merkmalen des Anspruchs 1 gelöst.

Gemäß Anspruch 1 ist die Vorrichtung als Gestell mit strahlenförmig sowie starr abstehenden Versteifungsarmen ausgebildet. Das Gestell ist auf einen Flächenbereich des Dachhimmels aufsetzbar und mit freien Versteifungsarmenden mit dem Dachhimmel lösbar verbindbar. Dadurch wird erreicht, daß das Gestell im auf dem Dachhimmel aufgesetzten und damit lösbar verbundenen Zustand den Dachhimmel mittels der starren Versteifungsarme so versteift, daß dieser zerstörungsfrei und insbesondere knick- und bruchfrei zur Fahrzeugkarosserie transportierbar und dort endmontierbar ist.

Weiter wird mit der erfindungsgemäßen Vorrichtung erreicht, daß diese zum Aufnehmen des Dachhimmels für einen Transport auf einfache und wenig zeitintensive Weise lediglich auf den Dachhimmel aufgesetzt zu werden braucht, d.h. daß der Dachhimmel im Gegensatz zu den Vorrichtungen des Stands der Technik nicht zuerst zur Vorrichtung transportiert werden muß, um eine Versteifung durchzuführen. Dies bringt ferner den Vorteil, daß bei der erfindungsgemäßen Vorrichtung das Gestell lediglich durch einen einzigen Werker aufgesetzt zu werden braucht und damit die Versteifung des Dachhimmels insgesamt von einem einzigen Werker durchgeführt werden kann. Die Vorrichtung kann dabei z. B. von oben her auf eine nach oben weisende Dachhimmelfläche eines Dachhimmelstapels aufgesetzt werden. Vorzugsweise handelt es sich hierbei um eine Sichtfläche des Dachhimmels im endmontierten Zustand. Damit ist mit der erfindungsgemäßen Vorrichtung insgesamt eine schnelle, einfache und preisgünstige Versteifung eines Dachhimmels eines Kraftfahrzeugs möglich. Dies ist insbesondere für den Einsatz in einer Serienproduktion von Kraftfahrzeugen von erheblichem Vorteil.

Weiter ist ein derartiges Gestell auch insgesamt einfach und preiswert herzustellen, wobei eine derartige Vorrichtung auch zur Versteifung von Dachhimmeln mit unterschiedlichen Geometrien verwendbar ist. Damit ist mit der erfindungsgemäßen Vorrichtung im Gegensatz zu denen des Stands der Technik insgesamt auch ein individuellerer und vielfältigerer Einsatz möglich.

In einer bevorzugten Ausführungsform weist das Gestell einen zentralen Trägerarm auf, von dem die Versteifungsarme vorzugsweise symmetrisch dazu abstehen und in dessen mittleren Bereich ein Handgriff angeordnet ist. Damit wird auf einfache und preiswerte Weise erreicht, daß das Gestell von einem einzigen Werker bedient werden kann. Dieser eine Werker setzt das Gestell auf den Dachhimmel auf und befestigt die freien Versteifungsarmenden, wodurch der Dachhimmel versteift ist. Anschließend kann er von diesem Werker aufgrund des geringen Gewichts des Dachhimmels auch ohne die Hilfe eines zweiten Werkers zum Fahrzeug transportiert und dort ggf. sogar endmontiert werden. Alternativ kann anstelle des Handgriffs aber auch eine Aufnahme für einen Roboterarm vorgesehen sein.

Grundsätzlich ist jede Anordnung von starr abstehenden Versteifungsarmen am Gestell möglich, die eine derart ausreichende Versteifung des Dachhimmels gewährleistet, daß dieser zerstörungsfrei, d. h. insbesondere knick- und bruchfrei transportiert und/oder montiert werden kann. Beispielsweise kann ein derartiges Gestell z. B. je nach der Größe des zu versteifenden Dachhimmels lediglich drei starre Versteifungsarme aufweisen. Vorzugsweise stehen jedoch wenigstens an den Enden des zentralen Trägerarms starre Versteifungsarme ab. In einer besonders bevorzugten Ausführungsform steht jeweils ein Paar von gleich langen Versteifungsarmen in etwa V-förmig und symmetrisch bezüglich des zentralen Trägerarms ab, so daß die freien Versteifungsarmenden eines jeden Paars im aufgesetzten Zustand vorzugsweise an auf gleicher Höhe gegenüberliegenden Dachhimmel-Angriffspunkten angreifen können. Damit ergibt sich eine besonders geeignete und wirkungsvolle Versteifung eines Dachhimmels zum zerstörungsfreien Transport und/oder Montage.

In einer konkreten und bevorzugten Ausführungsform greift ein erstes Paar von symmetrisch und V-förmig vom ersten Trägerarmende abstehenden Versteifungsarmen an vorderen Dachhimmel-Angriffspunkten im Bereich von Sonnenblenden und ein zweites Paar von symmetrisch und V-förmig vom zweiten Trägerarmende abstehenden Versteifungsarmen an hinteren Dachhimmel-Angriffspunkten im Bereich fondseitiger Dachhaltegriffe an. Damit ist insbesondere eine Versteifung von sehr großen Formhimmeln, wie diese z. B. in Kombifahrzeugen, Transportern oder Kleinbussen verwendet werden, auf einfache Weise möglich.

Die Versteifungsarme können dabei grundsätzlich in der Trägerarmebene liegen. Bevorzugt sind die Versteifungsarme jedoch gegen die Trägerarmebene geneigt und stehen vorzugsweise leicht winklig dazu ab. Damit wird eine Anpassung an eine ggf. leicht gewölbte Dachhimmelgeometrie erreicht. Weiter kann damit auch erreicht werden, daß wenigstens der Trägerarm vom Dachhimmel etwas abgehoben ist, so daß dieser von einem Werker mit einer Hand einfach untergriffen werden kann. Je nach den Erfordernissen und Gegebenheiten können die Versteifungsarme jedoch auch in einem größeren Winkel von dem Trägerarm abstehen. Ebenso ist es denkbar, daß die einzelnen Versteifungsarme unterschiedliche Längen aufweisen, sofern nur sicher gestellt ist, daß mit der Vorrichtung insgesamt eine zum zerstörungsfreien Transport und/oder Montage ausreichende Versteifung des Dachhimmels erfolgt. Weiter ist es auch möglich, an den Versteifungsarmen und/oder an deren Anbindungspunkten, z.B. am zentralen Trägerarm, Gelenke vorzusehen, die nach einer Anpassung an die jeweiligen Gegebenheiten wieder so versteift werden können, daß insgesamt starre Versteifungsarme erhalten werden. Ggf. können die Versteifungsarme auch teleskopierbar ausgebildet sein, wobei aber auch hier sicherzustellen ist, daß diese dann beim Gebrauch der Vorrichtung nicht weiter teleskopierbar sind und insgesamt starre Versteifungsarme ausbilden.

Das Gestell ist wenigstens teilweise aus Metall hergestellt. Vorzugsweise ist jedoch das gesamte Gestell aus einem Metall hergestellt. Als bevorzugtes Metall wird ein Leichtmetall vorgeschlagen, z. B. Aluminium. Damit ergibt sich ein insgesamt leichter Aufbau des Gestells, der von einem Werker einfach zu handhaben ist.

Die Versteifungsarme sind bevorzugt dünne Metallstäbe, die ggf. je nach den Erfordernissen auch gekrümmt sein können. Damit wird z. B. ebenfalls auf einfache Weise erreicht, daß die Geometrie des Gestells an die jeweiligen Dachhimmelgeometrien auf einfache Weise anpaßbar ist. Auf dem Dachhimmel können Aufnahmen für die freien Versteifungsarmenden ausgebildet sein. In einer bevorzugten Ausführungsform ist die lösbare Verbindung über Saugnäpfe und/oder Klippelemente und/oder Schraubverbindungen und/oder Rastverbindungen herstellbar. Gegebenenfalls ist die lösbare Verbindung dabei an ohnehin in Verbindung mit der Endmontage vorgesehenen Verbindungsstellen des Dachhimmels mit der Fahrzeugkarosserie herstellbar.

Anhand einer Zeichnung wird die Erfindung näher erläutert.

Die einzige Figur zeigt schematisch eine Unteransicht eines bereits in einer Fahrzeugkarosserie 1 zur Endmontage positionierten Dachhimmels 2.

Von der Fahrzeugkarosserie sind hier die A-Säulen 3, die B-Säulen 4 und die C-Säulen 5 teilweise sichtbar.

Wie dies der einzigen Figur weiter zu entnehmen ist, sind an der Unterseite des Dachhimmels 2 im Bereich der A-Säulen 3 schematisch Sonnenblenden 6 sowie im Bereich zwischen den A-Säulen 3 und den B-Säulen 4 jeweils randseitig vordere Dachhaltegriffe 7 und im Bereich zwischen den B-Säulen 4 und den C-Säulen 5 ebenfalls jeweils randseitig hintere Dachhaltegriffe 8 angebracht. Desweiteren ist im vorderen, A-säulennahen Bereich des Dachhimmels 2 noch eine Ausnehmung 9 für ein Schiebedach im Dachhimmel 2 vorgesehen.
Der Dachhimmel 2 ist hier mittels einer Vorrichtung 10 zur Versteifung des Dachhimmels 2 in der Endmontageposition positioniert.

Die Vorrichtung 10 ist als Gestell mit davon strahlenförmig sowie starr abstehenden Versteifungsarmen 11, 12, 13, 14 ausgebildet. Das Gestell 10 weist ferner einen zentralen Trägerarm 15 auf, von dessen Trägerarmenden 16, 22 die jeweils gleich langen Versteifungsarme 11, 12 und 13, 14 jeweils paarweise und in etwa V-förmig sowie symmetrisch bezüglich des zentralen Trägerarms 15 abstehen. Die Versteifungsarme 11, 12, 13, 14 sind dabei dünne Metallstäbe, die mit ihren freien Versteifungsarmenden 17, 18, 19, 20 mit dem Dachhimmel 2 lösbar verbindbar sind, z. B. über Saugnäpfe und/oder Klippelemente und/oder Schraubverbindungen und/oder Rastverbindungen, ggf. an ohnehin in Verbindung mit der Endmontage vorgesehenen Verbindungsstellen des Dachhimmels 2 mit der Fahrzeugkarosserie 1.

Das erste Paar von symmetrisch und V-förmig vom ersten Trägerarmende 16 abstehenden Versteifungsarmen 11, 12 greift an vorderen Dachhimmel-Angriffspunkten im Bereich der Sonnenblenden 6 und das zweite Paar von symmetrisch und V-förmig vom zweiten Trägerarmende 22 abstehenden Versteifungsarmen 13, 14 greift an hinteren Dachhimmel-Angriffspunkten im Bereich der hinteren Dachhaltegriffe 8 an.

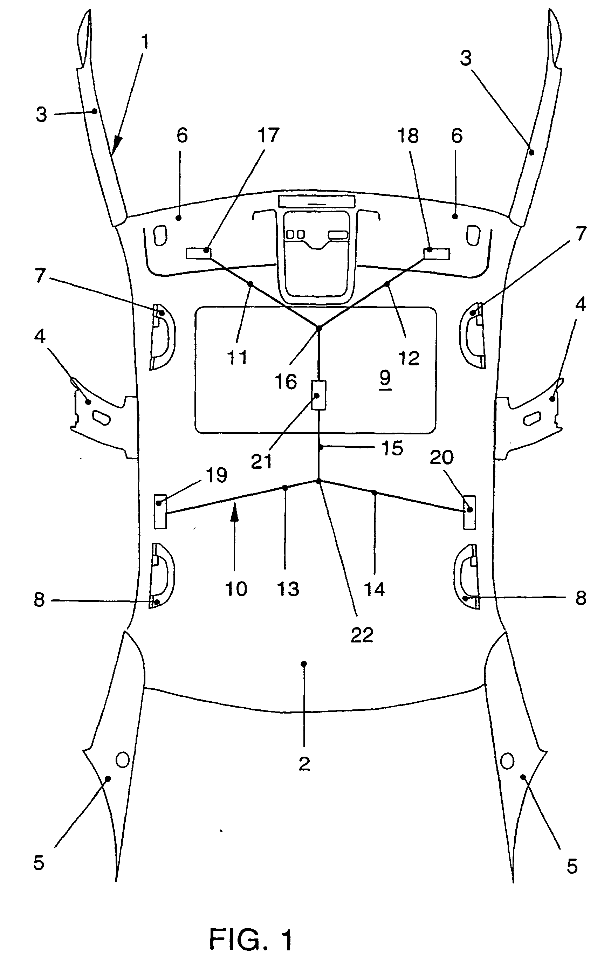

Das Gestell 10 mit seinen davon strahlenförmig sowie starr abstehenden Versteifungsarmen 11, 12, 13, 14 wird vor dem Transport und/oder der Montage des Dachhimmels 2 zum Fahrzeug auf einen Flächenbereich des Dachhimmels 2 aufgesetzt und mit den freien Versteifungsarmenden 17, 18, 19, 20 mit dem Dachhimmel lösbar verbunden. Damit wird erreicht, daß der Dachhimmel 2 mittels der starren Versteifungsarme 11, 12, 13, 14 so versteift wird, daß dieser anschließend zerstörungsfrei, d. h. insbesondere knick- und bruchfrei zum Fahrzeug transportierbar und in der in der Fig. 1 dargestellten Endmontageposition zur Endmontage fertig positionierbar ist.

Das Gestell 10 mit seinem Trägerarm 15 und den Versteifungsarmen 11, 12, 13, 14 ist beispielsweise aus Aluminium hergestellt, wobei der Trägerarm 15 und die Versteifungsarme 11, 12, 13, 14 jeweils dünne und stabile Metallstäbe sind. Je nachdem zu transportierenden und einzubauenden Dachhimmel 2 können die Versteifungsarme 11, 12, 13, 14 dabei auch gegen die Trägerarmebene geneigt sein und leicht winklig dazu abstehen und/oder die Versteifungsarme 11, 12, 13, 14 auch gekrümmt ausgebildet sein.

In einem mittleren Bereich des zentralen Trägerarms 15 ist ferner ein Handgriff 21 angeordnet, der von einem einzigen Werker ergreifbar ist und auf den Dachhimmel 2 aufsetzbar ist und anschließend auch von diesem einzigen Werker so handhabbar ist, daß dieser den Dachhimmel alleine zur Fahrzeugkarosserie 1 transportieren und dort ggf. endmontieren kann.

### BEZUGSZEICHEN LISTE

- 1: Fahrzeugkarosserie
- 2: Dachhimmel
- 3: A-Säulen
- 4: B-Säulen
- 5: C-Säulen
- 6: Sonnenblenden
- 7: vordere Dachhaltegriffe
- 8: hintere Dachhaltegriffe
- 9: Ausnehmung
- 10: Vorrichtung/Gestell
- 11: Versteifungsarm
- 12: Versteifungsarm
- 13: Versteifungsarm
- 14: Versteifungsarm
- 15: Trägerarm
- 16: Trägerarmende
- 17: freies Versteifungsarmende
- 18: freies Versteifungsarmende
- 19: freies Versteifungsarmende
- 20: freies Versteifungsarmende
- 21: Handgriff
- 22: Trägerarmende

## Patentansprüche

1. Vorrichtung zur Versteifung eines Dachhimmels (2) eines Kraftfahrzeugs zu dessen zerstörungsfreiem, insbesondere knick- und bruchfreien Transport und/oder Montage, die mit dem Dachhimmel (2) lösbar verbindbar ist, **dadurch gekennzeichnet,**
**daß** die Vorrichtung als Gestell (10) mit in etwa strahlenförmig sowie starr abstehenden Versteifungsarmen (11, 12, 13, 14) ausgebildet ist,
**daß** das Gestell (10) auf einen Flächenbereich des Dachhimmels (2) aufsetzbar und mit freien Versteifungsarmenden (17, 18, 19, 20) mit dem Dachhimmel (2) lösbar verbindbar ist dergestalt,
**daß** das Gestell (10) im auf dem Dachhimmel (2) aufgesetzten und damit lösbar verbundenen Zustand den Dachhimmel (2) mittels der starren Versteifungsarme (11, 12, 13, 14) so versteift, daß dieser zerstörungsfrei, insbesondere knick- und bruchfrei zur Fahrzeugkarosserie (1) transportierbar und dort endmontierbar ist.

2. Vorrichtung nach Anspruch 1, **dadurch gekennzeichnet, daß**
das Gestell (10) einen zentralen Trägerarm (15) aufweist, von dem die Versteifungsarme (11, 12, 13, 14) vorzugsweise symmetrisch dazu abstehen und in dessen mittleren Bereich ein Handgriff (21) angeordnet ist.

3. Vorrichtung nach Anspruch 2, **dadurch gekennzeichnet,**
**daß** wenigstens an den Enden (16, 22) des zentralen Trägerarms (15) Versteifungsarme (11, 12, 13, 14) abstehen, vorzugsweise jeweils ein Paar von gleich langen Versteifungsarmen (11, 12; 13, 14) in etwa V-förmig und symmetrisch bezüglich des zentralen Trägerarms (15) absteht dergestalt,
**daß** die freien Versteifungsarmenden (17, 18, 19, 20) eines jeden Paars im aufgesetzten Zustand vorzugsweise an auf gleicher Höhe gegenüberliegenden Dachhimmel-Angriffspunkten angreifen.

4. Vorrichtung nach Anspruch 3,
**dadurch gekennzeichnet, daß**
ein erstes Paar von symmetrisch und V-förmig vom ersten Trägerarmende (16) abstehenden Versteifungsarmen (11, 12, 13, 14) an vorderen Dachhimmel-Angriffspunkten im Bereich von Sonnenblenden (6) und ein zweites Paar von symmetrisch und V-förmig vom zweiten Trägerarmende (22) abstehenden Versteifungsarmen (11, 12, 13, 14) an hinteren Dachhimmel-Angriffspunkten im Bereich fondseitiger Dachhaltegriffe (8) angreift.

5. Vorrichtung nach Anspruch 3 oder Anspruch 4,
**dadurch gekennzeichnet, daß**
die Versteifungsarme (11, 12, 13, 14) gegen die Trägerarmebene geneigt sind und vorzugsweise leicht winklig dazu abstehen.

6. Vorrichtung nach einem der Ansprüche 1 bis 5,
**dadurch gekennzeichnet, daß**
das Gestell (10) wenigstens teilweise aus Metall, vorzugsweise aus Leichtmetall, hergestellt ist.

7. Vorrichtung nach einem der Ansprüche 1 bis 6,
**dadurch gekennzeichnet, daß**
die Versteifungsarme (11, 12, 13, 14) dünne Metallstäbe sind, die gegebenenfalls gekrümmt sind.

8. Vorrichtung nach einem der Ansprüche 1 bis 7,
**dadurch gekennzeichnet, daß**
auf dem Dachhimmel (2) Aufnahmen für die freien Versteifungsarmenden (17, 18, 19, 20) ausgebildet sind.

9. Vorrichtung nach einem der Ansprüche 1 bis 8,
**dadurch gekennzeichnet, daß**
die lösbare Verbindung der Vorrichtung mit dem Dachhimmel (2) über Saugnäpfe und/oder Klippelemente und/oder Schraubverbindungen und/oder Rastverbindungen gegebenenfalls an ohnehin in Verbindung mit der Endmontage vorgesehenen Verbindungsstellen des Dachhimmels (2) mit der Fahrzeugkarosserie (1) herstellbar ist.

## Claims

1. Device for stiffening an inside roof lining (2) of a motor vehicle for its transportation and/or installation without being destroyed, in particular without being buckled and fractured, which device can releasably be connected to the inside roof lining (2), **characterized in that** the device is designed as a framework (10) with stiffening arms (11, 12, 13, 14) which protrude approximately radially and rigidly, **in that** the framework (10) can be placed onto a surface region of the inside roof lining (2) and can be releasably connected to the inside roof lining (2) by means of free stiffening-arm ends (17, 18, 19, 20) in such a manner that the framework (10), when placed on the inside roof lining (2) therefore connected releasably thereto, stiffens the inside roof lining (2) by means of the rigid stiffening arms (11, 12, 13, 14) in such a manner that the said inside roof lining can be transported to the vehicle body (1) without being destroyed, in particular without being buckled and fractured, and can be finally installed there.

2. Device according to Claim 1, **characterized in that** the framework (10) has a cent ral support arm (15) from which the stiffening arms (11, 12, 13, 14) protrude preferably symmetrically thereto, and a handle (21) is arranged in its central region.

3. Device according to Claim 2, **characterized in that** stiffening arms (11, 12, 13, 14) protrude at least at the ends (16, 22) of the central support arm (15), preferably one pair of stiffening arms (11, 12; 13, 14) of equal length protrudes in each case in an approximately V-shaped and symmetrical manner with respect to the central support arm (15) in such a manner that the free stiffening-arm ends (17, 18, 19, 20) of each pair, when placed on, preferably engage on engagement points of the inside roof lining which lie opposite one another at the same height.

4. Device according to Claim 3, **characterized in that** a first pair of stiffening arms (11, 12, 13, 14) protruding in a symmetrical and V-shaped manner from the first support-arm end (16) engages on front engagement points of the inside roof lining in the region of sun visors (6), and a second pair of stiffening arms (11, 12, 13, 14) protruding in a symmetrically and V-shaped manner from the second support-arm end (22) engages on rear engagement points of the inside roof lining in the region of roof grab handles (8) in the rear.

5. Device according to Claim 3 or Claim 4, **characterized in that** the stiffening arms (11, 12, 13, 14) are inclined towards the support-arm plane and preferably protrude in a slightly angled manner thereto.

6. Device according to one of Claims 1 to 5, **characterized in that** the framework (10) is at least partially produced from metal, preferably from light metal.

7. Device according to one of Claims 1 to 6, **characterized in that** the stiffening arms (11, 12, 13, 14) are thin metal rods which are curved, if appropriate.

8. Device according to one of Claims 1 to 7, **characterized in that** receptacles for the free stiffening-arm ends (17, 18, 19, 20) are formed on the inside roof lining (2).

9. Device according to one of Claims 1 to 8, **characterized in that** the releasable connection of the device to the inside roof lining (2) can be produced via suction cups and/or clip elements and/or screw connections and/or latching connections, if appropriate at connecting points of the inside roof lining (2) to the vehicle body (1), which points are provided in any case in connection with the final installation.

## Revendications

1. Dispositif pour renforcer une garniture de pavillon (2) de véhicule automobile en vue de son transport et/ou de son montage exempts de destruction, notamment de pliures et de fractures, qui peut être raccordé de manière détachable à la garniture de pavillon (2),
**caractérisé en ce que**
le dispositif est réalisé sous forme de structure (10) avec des bras de renforcement (11, 12, 13, 14) saillant sous forme approximativement en faisceau et rigidement,
**en ce que** la structure (10) peut être placée sur une partie plane de la garniture de pavillon (2) et peut être raccordée de manière détachable à la garniture de pavillon (2) avec les extrémités libres (17, 18, 19, 20) des bras de renforcement de telle sorte
que la structure (10), dans l'état posé sur la garniture de pavillon (2) et donc raccordé de manière détachable à celle-ci, renforce la garniture de pavillon (2) au moyen des bras de renforcement rigides (11, 12, 13, 14) de telle sorte que celle-ci puisse être transportée sans destruction, notamment sans pliure ni fracture jusqu'à la carrosserie du véhicule (1) et puisse y être finalement montée.

2. Dispositif selon la revendication 1,
**caractérisé en ce que**
la structure (10) présente un bras de support central (15) duquel partent les bras de renforcement (11, 12, 13, 14) de préférence symétriquement par rapport à lui, et dans la région centrale duquel est disposée une poignée (21).

3. Dispositif selon la revendication 2,
**caractérisé en ce que**
les bras de renforcement (11, 12, 13, 14) partent au moins au niveau des extrémités (16, 22) du bras de support central (15), de préférence à chaque fois une paire de bras de renforcement de même longueur (11, 12 ; 13, 14) part sous f orme de V et symétriquement par rapport au bras de support central (15), de telle sorte que les extrémités libres (17, 18, 19, 20) des bras de renforcement d'une paire viennent en prise dans l'état installé de préférence en des points d'attache de la garniture de pavillon opposés et à la même hauteur.

4. Dispositif selon la revendication 3,
**caractérisé en ce que**
une première paire de bras de renforcement (11, 12, 13, 14) partant symétriquement et en forme de V depuis la première extrémité (16) du bras de support vient en prise sur des points d'attache de la garniture de pavillon avant dans la région du pare-soleil (6) et une deuxième paire de bras de renforcement (11, 12, 13, 14) partant symétriquement et en forme de V depuis la deuxième extrémité (22) du bras de support vient en prise sur des points d'attache de la garniture de pavillon arrière dans la région de poignées de maintien du toit (8) du côté arrière.

5. Dispositif selon la revendication 3 ou la revendication 4,
**caractérisé en ce que**
les bras de renforcement (11, 12, 13, 14) sont inclinés vers le plan du bras de support et en partent de préférence avec un petit angle par rapport à lui.

6. Dispositif selon l'une quelconque des revendications 1 à 5,
**caractérisé en ce que**
la structure (10) est fabriquée au moins partiellement en métal, de préférence en métal léger.

7. Dispositif selon l'une quelconque des revendications 1 à 6,
**caractérisé en ce que**
les bras de renforcement (11, 12, 13, 14) sont de minces barres métalliques, qui sont éventuellement courbées.

8. Dispositif selon l'une quelconque des revendications 1 à 7,
**caractérisé en ce que**
des logements pour les extrémités libres (17, 18, 19, 20) des bras de renforcement sont réalisées sur la garniture de pavillon (2).

9. Dispositif selon l'une quelconque des revendications 1 à 8,
**caractérisé en ce que**
la connexion détachable du dispositif à la garniture de pavillon (2) peut être réalisée par le biais de ventouses et/ou d'élément clipsés et/ou de raccords à vis et/ou de raccords par encliquetage éventuellement sur des points de connexion de la garniture de pavillon (2) à la carrosserie du véhicule (1) prévus simplement en liaison avec le montage terminal.
